Europäisches Patentamt

European Patent Office

Office européen des brevets

(19)

(11) **EP 0 842 409 B1**

(12) **FASCICULE DE BREVET EUROPEEN**

(45) Date de publication et mention
de la délivrance du brevet:
**21.02.2001 Bulletin 2001/08**

(21) Numéro de dépôt: **96925778.1**

(22) Date de dépôt: **12.07.1996**

(51) Int Cl.⁷: **G01M 11/02**

(86) Numéro de dépôt international:
**PCT/FR96/01087**

(87) Numéro de publication internationale:
**WO 97/05467 (13.02.1997 Gazette 1997/08)**

(54) **APPAREIL ET PROCEDE DE DEFLECTOMETRIE A FRANGES**

GERÄT UND VERFAHREN ZUR STREIFEN-ABLENKUNGSMESSUNG

FRINGE DEFLECTOMETRY APPARATUS AND METHOD

(84) Etats contractants désignés:
**DE ES GB**

(30) Priorité: **02.08.1995 FR 9509411**

(43) Date de publication de la demande:
**20.05.1998 Bulletin 1998/21**

(73) Titulaire: **ESSILOR INTERNATIONAL
(COMPAGNIE GENERALE D'OPTIQUE)
F-94227 Charenton cédex (FR)**

(72) Inventeurs:
• **MAZUET, Denis
F-75018 Paris (FR)**

• **BERTRAND, Patrick
F-92130 Issy-les-Moulineaux (FR)**
• **PHAN, Do, Quyen
F-77124 Chauconin-Neufmontiers (FR)**
• **MOHR, Werner
D-94227 Zwiesel (DE)**

(74) Mandataire: **Desrousseaux, Grégoire Marie et al
Cabinet HIRSCH-DESROUSSEAUX-POCHART,
34 rue de Bassano
75008 Paris (FR)**

(56) Documents cités:
**EP-A- 0 644 411        FR-A- 2 647 913**

EP 0 842 409 B1

## Description

La présente invention a pour objet un appareil de déflectométrie à franges, comprenant des moyens d'éclairage d'un composant optique à mesurer par un rayonnement de front d'onde connu; des moyens de déflectométrie dudit rayonnement après sa réflexion ou sa transmission par ledit composant optique à mesurer; et des moyens pour matérialiser un rayon de référence,

Elle a aussi pour objet un procédé de déflectométrie à franges, comprenant les étapes consistant à éclairer un composant optique à mesurer par un rayonnement de front d'onde connu, et à analyser les franges générées dans des moyens de déflectométrie par le rayonnement réfléchi ou transmis par le composant.

L'invention couvre aussi l'application de ce procédé à la mesure de lentilles ophtalmiques, de lentilles à gradient d'indice et de moules pour lentilles ophtalmiques.

Les procédés de l'invention s'appliquent dans les appareils de déflectométrie à franges dans lesquels il n'y a pas de référence de phase, comme par exemple l'interférométrie différentielle, la déflectométrie par Moiré, ou la déflectométrie par la méthode de Ronchi.

Un appareil de déflectométrie en réflexion ou en transmission est décrit dans les documents FR-A-2 710 162 et EP-A-0 644 411, au nom de la demanderesse. Cet appareil permet la mesure par réflexion ou transmission de la structure géométrique d'un composant optique.

Le principe d'un tel appareil de mesure est d'éclairer le composant optique à mesurer par un rayonnement de surface d'onde connue, et dans le cas le plus simple de l'éclairer avec une onde sphérique, et de mesurer l'allure de la surface d'onde après réflexion ou transmission sur le composant optique à mesurer. La mesure de la surface d'onde après réflexion ou transmission permet de remonter aux caractéristiques géométriques du composant à mesurer.

L'invention s'applique aussi aux appareils décrits dans FR-A-2 647 912 et FR-A-2 647 913.

Il est explicitement fait référence aux documents précités pour plus de détails quant au principe de la mesure et à un dispositif possible pour mettre cette mesure en oeuvre.

L'invention s'applique aux appareils de déflectométrie à franges, en transmission comme en réflexion. Elle permet, de façon générale, de mesurer l'inclinaison ou tilt d'une surface d'onde par rapport à l'axe optique de l'appareil. Cette inclinaison se traduit dans une méthode de déflectométrie à franges par un terme de phase compris entre $-\pi$ et $\pi$, qui est déterminé par détection de phase, et par un terme de phase multiple de $2\pi$, qui n'est pas donné par la méthode de détection de phase. L'invention permet de lever cette incertitude.

Dans le cas de l'utilisation en réflexion du montage des documents FR-A-2 710 162 et EP-A-0 644 411, il n'est pas nécessaire de mesurer l'inclinaison de la surface d'onde après réflexion; une autocollimation en un point de la surface permet d'avoir une référence de phase. L'invention peut permettre d'éviter cette opération.

Dans le cas de l'utilisation en transmission du montage des documents FR-A-2 710 162 et EP-A-0 644 411 se pose un problème technique nouveau.

Ce problème est celui de la détermination du prisme qui existe entre les deux faces du composant. De fait, les dispositifs des documents précités peuvent fonctionner en transmission, pour des composants présentant un axe optique, et dans la mesure où l'on connaît la position de cet axe optique: dans ce cas, on connaît le prisme sur l'axe optique, qui est nul, et on dispose d'une référence de phase. Si on ne connaît pas l'axe optique, ou si le composant ne présente pas d'axe optique, on pourrait imaginer le cas échéant de mesurer le prisme en introduisant des jauges de prisme après le composant à mesurer; cette méthode serait peu précise, et longue à mettre en oeuvre, et impliquerait en outre de procéder à un alignement de la première face du composant.

En somme, les appareils connus, en transmission, ne permettent pas d'obtenir facilement une mesure du prisme qui existe entre les faces d'entrée et de sortie du composant. Ce problème nouveau se pose pour tout composant, notamment pour la mesure d'un dioptre d'indice constant ou pour une lame à faces parallèles à gradient d'indice. La solution de ce problème revient à fournir, dans un appareil déflectométrique en transmission, une référence de phase pour les moyens d'analyse déflectométrique.

L'invention vise à résoudre ces problèmes techniques.

Elle a pour objet un appareil de déflectométrie à franges, comprenant des moyens d'éclairage d'un composant optique à mesurer par un rayonnement de front d'onde connu; des moyens de déflectométrie dudit rayonnement après sa réflexion ou sa transmission par ledit composant optique à mesurer; et des moyens pour matérialiser un rayon de référence, caractérisé en ce qu'il comprend en outre des moyens de mesure de l'aberration transverse du rayon de référence après sa réflexion ou sa transmission par ledit composant optique à mesurer.

Dans un mode de réalisation, les moyens de mesure de l'aberration transverse du rayon de référence sont dans une voie distincte des moyens de déflectométrie.

L'appareil de déflectométrie à franges peut comprendre une lame semi-réfléchissante renvoyant le rayonnement réfléchi ou transmis par ledit composant optique à mesurer d'une part vers lesdits moyens de déflectométrie et d'autres part vers lesdits moyens de mesure de l'aberration transverse.

Dans un mode de réalisation, lesdits moyens de mesure de l'aberration transverse sont dans un plan optiquement conjugué du plan desdits moyens de déflectométrie.

Les moyens de mesure de l'aberration transverse peuvent comprendre une caméra CCD, et des moyens d'acquisition de la position d'un spot sur l'image de ladite caméra.

Dans un autre mode de réalisation, les moyens de déflectométrie comprennent un réseau de Ronchi, et des moyens d'analyse des franges générées par le réseau.

Les moyens pour matérialiser un rayon de référence peuvent comprendre un laser symétrique desdits moyens d'éclairage par rapport à une lame semi-réfléchissante. Dans un mode de réalisation, les moyens pour matérialiser un rayon de référence matérialisent un rayon paraxial.

L'invention a aussi pour objet un procédé de déflectométrie à franges, notamment susceptible d'être mis en oeuvre dans un tel appareil, comprenant les étapes consistant à éclairer un composant optique à mesurer par un rayonnement de front d'onde connu, et à analyser les franges générées dans des moyens de déflectométrie par le rayonnement réfléchi ou transmis par le composant, caractérisé en ce qu'il comprend en outre les étapes consistant à

- mesurer pour un rayon réfléchi ou transmis par le composant la phase réduite sur les moyens de déflectométrie;
- mesurer l'aberration transverse dudit rayon;
- calculer la phase absolue du rayon sur les moyens de déflectométrie à partir de la mesure de ladite phase réduite, en levant l'indétermination grâce à la mesure de ladite aberration transverse.

On peut mesurer l'aberration transverse dudit rayon dans une voie de référence différente de la voie des moyens de déflectométrie.

Dans un mode de mise en oeuvre, le procédé comprend une étape d'étalonnage consistant à déterminer une relation entre l'aberration transverse d'un rayon réfléchi ou transmis par le composant et la pente dudit rayon dans les moyens de déflectométrie. Ceci est particulièrement pertinent lorsque la méthode de déflectométrie est un méthode autre que le méthode de Ronchi.

Dans ce cas, l'étape d'étalonnage peut comprendre les étapes consistant à:

- éclairer un composant optique de prisme variable;
- déplacer au moins deux fois ledit composant optique;
- mesurer pour chaque déplacement du composant optique, et pour un rayon l'aberration transverse, et la phase réduite sur les moyens de déflectométrie;
- compter pour chaque déplacement du composant optique le nombre de franges qui défilent sur lesdits moyens de déflectométrie au cours du déplacement;
- calculer pour chaque déplacement du composant optique la pente dudit rayon dans les moyens de déflectométrie à partir des valeurs mesurées et comptée;
- déterminer ladite relation à partir des valeurs de l'aberration transverse et de la pente obtenues pour chaque déplacement.

L'étape d'étalonnage peut alternativement comprendre au moins deux fois les étapes consistant à:

- éclairer un composant optique de prisme connu;
- mesurer pour un rayon l'aberration transverse d'un rayon, et la phase réduite sur les moyens de déflectométrie;
- calculer la pente dudit rayon dans les moyens de déflectométrie à partir des valeurs mesurées et de la valeur du prisme du composant optique;

et en ce que l'on détermine ladite relation à partir de l'ensemble des valeurs de l'aberration transverse et de la pente ainsi obtenues.

Prévoir plusieurs rayons et un seul déplacement ou composant de prisme connu est équivalent.

Dans un autre mode de mise en oeuvre de l'invention, la méthode de déflectométrie à franges est une méthode de Ronchi, et le procédé comprend une étape d'étalonnage consistant à déterminer une relation entre l'aberration transverse d'un rayon dans la voie de référence et l'aberration transverse dudit rayon dans les moyens de déflectométrie.

Dans ce cas, l'étape d'étalonnage peut comprendre les étapes consistant à:

- éclairer un composant optique de prisme variable;
- déplacer au moins deux fois ledit composant optique
- mesurer pour chaque déplacement du composant optique, et pour un rayon l'aberration transverse dans la voie de référence, et la phase réduite sur les moyens de déflectométrie;
- compter pour chaque déplacement du composant optique le nombre de franges qui défilent sur lesdits moyens de déflectométrie au cours du déplacement;
- calculer pour chaque déplacement du composant optique l'aberration transverse dudit rayon dans les moyens de déflectométrie à partir des valeurs mesurées et comptée;
- déterminer ladite relation à partir des valeurs de l'aberration transverse dans la voie de référence et de l'aberration transverse dudit rayon dans les moyens de déflectométrie obtenues pour chaque déplacement.

L'étape d'étalonnage peut alternativement comprendre au moins deux fois les étapes consistant à:

- éclairer un composant optique de prisme connu;

- mesurer pour un rayon l'aberration transverse dans la voie de référence, et la phase réduite sur les moyens de déflectométrie;
- calculer l'aberration transverse dudit rayon dans les moyens de déflectométrie à partir des valeurs mesurées et de la valeur du prisme;

et en ce que l'on détermine ladite relation à partir de l'ensemble des valeurs de l'aberration transverse dans la voie de référence et de l'aberration transverse dans les moyens de déflectométrie ainsi obtenues.

Prévoir plusieurs rayons et un seul déplacement ou composant de prisme connu est équivalent.

Dans un mode de mise en oeuvre du procédé, la relation est une fonction linéaire.

Dans ce cas, ledit composant optique peut être déplacé au moins deux fois.

Enfin, l'invention a aussi pour objet l'application d'un tel procédé à la mesure de lentilles ophtalmiques.

D'autres avantages et caractéristiques de l'invention apparaîtront à la lecture de la description qui suit d'un mode de réalisation, donné à titre d'exemple uniquement, et en référence aux dessins annexés qui montrent:

- figure 1 un schéma d'un appareil pour la mise en oeuvre d'une déflectométrie en transmission;
- figure 2, un schéma d'une partie de l'appareil de la figure 1, dans le cas de la mesure d'une lame à faces parallèles à gradient d'indice;
- figure 3, un schéma d'une partie de l'appareil de la figure 1, dans le cas de la mesure d'une lame à faces parallèles à gradient d'indice constant;
- figure 4 un schéma complet d'un appareil déflectométrique en transmission pour la mise en oeuvre de l'invention;
- figure 5 un ordinogramme d'un procédé d'étalonnage de l'appareil selon l'invention;
- figure 6 un ordinogramme d'un procédé de mesure selon l'invention.
- figure 7, un schéma analogue à celui de la figure 4, mais pour la mise en oeuvre d'une déflectométrie en réflexion.

On appelle, pour un angle ou une phase, angle ou phase réduite la valeur modulo $2\pi$ de l'angle ou phase qui est comprise entre $-\pi$ et $\pi$. On appelle angle ou phase absolue la valeur réelle de l'angle ou de la phase. Par exemple, une phase $\Phi$ de $7\pi/2$ (phase absolue) correspond à une phase réduite $\varphi$ de $7\pi/2 - 2\pi = -\pi/2$. On note systématiquement dans toute la suite les phases réduites par le signe $\varphi$ (lettre grecque phi minuscule) et les phases absolues par le signe $\Phi$ (lettre grecque phi majuscule). La connaissance de la seule phase réduite $\varphi$ laisse subsister sur la phase absolue $\Phi$ une incertitude ou ambiguïté ou indétermination qui est un multiple de $2\pi$.

Dans la suite, on décrit de façon détaillée l'application de l'invention à un appareil mettant en oeuvre la méthode de Ronchi. Dans ce cas, il est avantageux de déterminer l'aberration transverse des rayons dans le plan du réseau de déflectométrie. L'invention peut aussi être mise en oeuvre avec d'autres méthodes de déflectométrie à franges, auquel cas on détermine la pente des rayons, et non pas l'aberration transverse; ceci est par exemple le cas de la méthode par moiré. En tout état de cause, déterminer l'aberration transverse ou la pente des rayons est équivalent, puisque la pente des rayons est égale au rapport de l'aberration transverse par la focale f de l'objectif ou de la lentille placée entre le composant à mesurer et les moyens de déflectométrie.

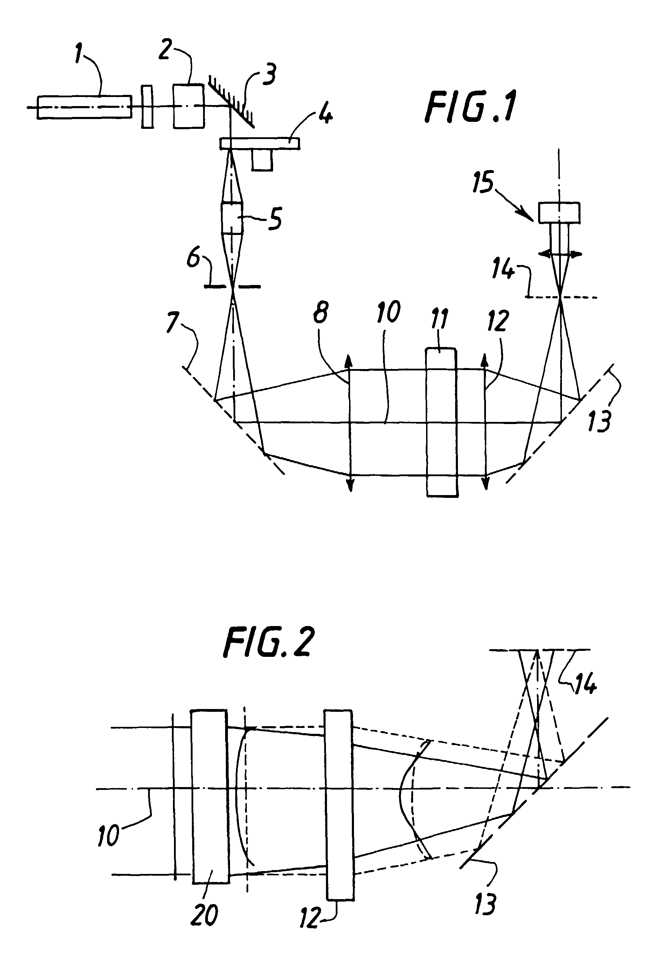

La figure 1 montre un schéma d'un appareil pour la mise en oeuvre d'une déflectométrie en transmission. L'appareil de la figure 1 comprend des moyens de génération d'une source de rayonnement ponctuelle. Un laser de mesure du front d'onde 1, muni d'un obturateur 2, émet un rayon laser vers un miroir 3. Le miroir 3 renvoie le rayon laser vers un dépoli tournant 4. Le rayonnement issu du dépoli tournant 4 entre dans un objectif de microscope 5. En sortie de l'objectif de microscope 5, le rayonnement passe par un trou source 6.

Le laser de mesure du front d'onde 1, l'obturateur 2, le miroir 3, le dépoli tournant 4, l'objectif de microscope 5 et le trou source 6 constituent des moyens de génération d'une source de rayonnement ponctuelle monochromatique de haute qualité.

Le rayonnement issu du trou source 6 est renvoyé par une lame semi réfléchissante 7 vers une première lentille 8. L'axe optique de la lentille 8 est confondu avec l'axe optique 10 de l'appareil de mesure de la figure 1, et le foyer de la lentille 8 coïncide avec la source de rayonnement ponctuelle, de sorte que l'on retrouve en sortie de la lentille 8 un front d'onde plan perpendiculaire à l'axe optique 10 de l'appareil. On pourrait aussi utiliser à la place d'une lentille 8 un objectif fournissant en sortie un front d'onde de nature connue.

Un porte pièce 11 est susceptible de recevoir un composant optique à mesurer et de le maintenir en position sur l'axe optique 10. On note dans la suite (x, y, z) les trois axes correspondant respectivement à l'axe optique 10, à un axe orthogonal dans le plan vertical, et à un troisième axe formant un repère orthonormé. Le porte pièce 11 se déplace avantageusement le long de l'axe optique 10 (axe x), et dans un plan perpendiculaire à celui-ci (axes y et z).

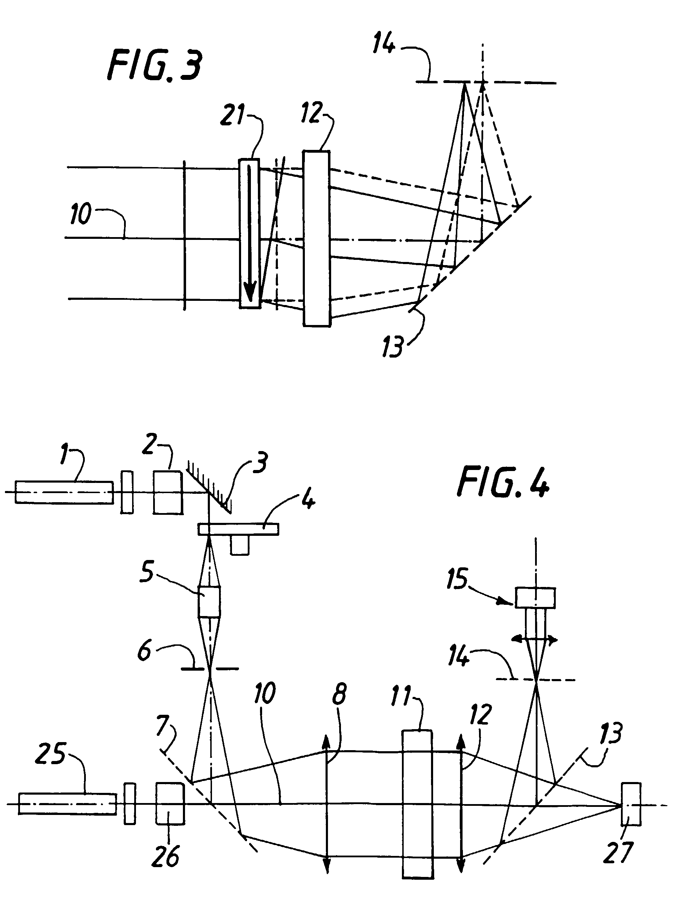

On trouve ensuite le long de l'axe optique 10 une seconde lentille 12. Une lame semi réfléchissante 13 renvoie le rayonnement issu de la seconde lentille vers une voie de déflectométrie, comprenant un réseau 14 placé sur l'axe optique au foyer de la seconde lentille 12. La lame semi réfléchissante renvoie aussi le rayonnement vers une voie de référence décrite en référence à la figure 4.

Le réseau 14 est constitué d'un ensemble de lignes alternativement noires et transparentes. Une caméra de mesure du front d'onde 15, par exemple une caméra CCD, capte l'image formée en sortie du réseau sur un écran dépoli ou un objectif non référencé. Le plan du CCD est conjugué optiquement de la face de sortie du composant à mesurer.

Le dispositif de la figure 1 permet une analyse déflectométrique en transmission d'un composant optique placé dans le porte pièce 11, comme expliqué en référence à la figure 2.

La figure 2 montre un schéma d'une partie de l'appareil de la figure 1, dans le cas de la mesure d'une lame à faces parallèles à gradient d'indice. La figure 2 montre l'axe optique 10, la seconde lentille 12, la lame 13 et le réseau 14. La figure 2 illustre le cas où le composant optique à mesurer est une lame 20 à faces parallèles et à gradient d'indice.

Comme indiqué plus haut, on retrouve en sortie de la première lentille un front d'onde plan. En l'absence de composant dans le porte-pièce, ou dans le cas d'une lame d'indice constant, la seconde lentille 12 reçoit un front d'onde plan et génère un front d'onde sphérique convergent sur un point du réseau 14. Selon que le point de convergence se trouve ou non sur une ligne noire du réseau, le front d'onde sphérique bloqué ou transmis et on visualise sur la caméra 15 une teinte plate uniforme. Cette situation est indiquée en traits pointillés sur la figure 2.

Lorsque l'on dispose dans le porte-pièce une lame 20 d'indice variable, ou plus généralement un composant optique quelconque, le front d'onde après le composant n'est plus plan et le rayonnement issu de la seconde lentille 12 ne converge plus vers un point du réseau: cette situation est représentée en traits pleins sur la figure 2; on voit alors apparaître sur la caméra une image avec plusieurs franges. L'analyse de ces franges par une méthode telle que celle qui est décrite dans les demandes précitées permet de calculer la pente des différents rayons et l'allure du front d'onde en sortie de la seconde lentille, et en remontant, en sortie du composant à analyser. Comme décrit dans les documents précités, on procède à cette analyse en déplaçant successivement le réseau suivant l'axe y, et en faisant tourner le réseau autour de l'axe optique du système, puis en déplaçant successivement le réseau suivant l'axe z, et en analysant les variations dans le système de franges pour chaque déplacement dans les deux directions.

La figure 3 montre un schéma d'une partie de l'appareil de la figure 1, dans le cas de la mesure d'une lame à faces parallèles à gradient d'indice constant. On retrouve sur la figure 3 les mêmes éléments que sur la figure 2: toutefois, le composant à analyser 21 est une lame à faces parallèles à gradient d'indice constant. Dans ce cas, le front d'onde après le composant 21 est plan et forme avec l'axe optique 10 du montage un angle fonction du gradient d'indice. La seconde lentille 12 reçoit un front d'onde plan et génère un front d'onde sphérique convergent sur un point du réseau 14. De nouveau on retrouve sur la caméra 15 une teinte plate uniforme. Les rayons lumineux extrêmes sont portés dans ce cas sur la figure 3 en traits pleins.

On a aussi porté en pointillés sur la figure 3, comme sur la figure 2, l'allure des rayons pour une lame d'indice constant, ou en l'absence de composant optique sur le porte pièce. On constate que le point de convergence du front d'onde sphérique pour une lame à gradient d'indice constant est décalé sur le réseau, par rapport au point de convergence en l'absence de composant optique. Il en est de même pour un composant optique d'indice constant et parfaitement prismatique.

Il est possible de mesurer avec précision la phase réduite en un point du réseau, par exemple au centre. Toutefois, il n'est pas possible dans un montage tel que celui de la figure 1 de faire la différence entre deux lignes successives du réseau 14. En termes de phases, on ne peut mesurer qu'une phase réduite et on garde une incertitude multiple de $2\pi$, qui correspond à un nombre entier de lignes du réseau.

Autrement dit, il est impossible de déterminer le nombre de lignes du réseau séparant sur le réseau le point de convergence sans composant optique (traits pointillés sur la figure 3) et le point de convergence avec un composant purement prismatique (traits pleins sur la figure 3).

L'invention permet d'obtenir une mesure de la phase absolue en un point du réseau, et de lever ainsi cette incertitude en tout point du réseau.

Elle s'applique pour la mesure de l'inclinaison ou tilt d'une surface d'onde, et permet donc de déterminer le prisme d'un composant optique parfaitement prismatique, d'un composant optique homogène quelconque, ou encore la valeur du gradient d'indice d'une lame à faces planes et parallèles.

La figure 4 montre un schéma complet d'un appareil de déflectométrie en transmission pour la mise en oeuvre de l'invention. On reconnaît sur la figure 4 les différents éléments décrits en référence à la figure 1. Le montage de la figure 4 présente en outre un laser de mesure de l'aberration 25 et un obturateur 26 symétriques des moyens de génération d'une source ponctuelle par rapport à la lame semi réfléchissante 7. Le laser de mesure de l'aberration 25 et l'obturateur 26 sont susceptibles d'émettre un rayon de référence, vers la première lentille 8.

Dans le montage de la figure 4, ce rayon de référence est émis le long de l'axe optique 10: il pourrait aussi, comme expliqué plus bas, être émis parallèlement à l'axe optique sans être confondu avec lui. Au lieu d'un laser de mesure de l'aberration et d'un obturateur, on peut aussi utiliser tout dispositif approprié pour matérialiser un rayon de référence, et par exemple un simple trou placé dans le champ avant ou après le composant optique à mesurer.

Le montage de la figure 4 présente une voie de référence, comprenant une caméra de mesure de l'aberration 27 symétrique du réseau 14. La caméra de mesure de l'aberration est susceptible de recevoir à travers la lame semi réfléchissante 13 le rayonnement transmis par la seconde lentille 12. La caméra 27 est par exemple une caméra CCD du même type que la caméra 15. Avantageusement, la caméra 27 est disposée perpendiculairement à l'axe optique et peut être disposée n'importe où sur cet axe, selon les besoins. Elle peut notamment être disposée de sorte à se trouver conjuguée du plan desdits moyens de déflectométrie.

Lorsque l'on ferme l'obturateur 2 du laser de mesure du front d'onde et que l'on ouvre l'obturateur 26 du laser de mesure de l'aberration, on visualise sur la caméra de mesure de l'aberration 27 un spot correspondant au rayon de référence émis par le laser de mesure de l'aberration 25. En l'absence de composant sur le porte pièce 11, dans le montage de la figure 4, ce faisceau matérialise l'axe optique 10 du montage. Lorsque l'on insère un composant optique sur le porte-pièce 11, on visualise sur la caméra de mesure de l'aberration 27 l'aberration transverse du rayon paraxial matérialisé par le rayon de référence.

Le montage de la figure 4 comprend en outre un dispositif de mesure de phase, non représenté, qui permet de mesurer des phases réduites dans le plan du réseau. On peut utiliser pour le montage de la figure 4 des composants optiques connus, et des caméras CCD du commerce.

L'invention propose de déterminer le prisme ou le tilt d'un composant optique, en calculant la phase absolue en un point des moyens de déflectométrie.

On décrit d'abord l'étalonnage selon l'invention dans un montage du type de celui de la figure 4. Pour l'étalonnage, l'invention part du principe qu'il existe pour un rayon donné dans le montage, séparé en deux rayons par la lame semi réfléchissante 13 une relation entre l'aberration transverse sur la caméra de mesure de l'aberration 27 et l'aberration transverse sur le réseau 14. Plus généralement, l'invention part du principe qu'il existe une relation pour tout rayon entre l'aberration transverse, qui est mesurée par les moyens de mesure de l'aberration, et la pente du rayon dans le plan des moyens de déflectométrie. L'étalonnage consiste à établir cette relation.

Dans le mode de mise en oeuvre décrit dans la suite, l'invention propose d'établir cette relation sous forme d'une fonction linéaire entre l'aberration transverse, mesurée par les moyens de mesure de l'aberration 27, et l'aberration transverse dans le plan du réseau 14. Comme expliqué plus haut, ceci est particulièrement avantageux dans le cas de la méthode de Ronchi, mais on pourrait aussi bien établir une relation entre l'aberration transverse mesurée et la pente du rayon dans le plan du réseau 14.

L'invention propose d'étalonner le montage en plaçant sur le porte pièce un composant optique de révolution, en alignant son centre optique sur l'axe du montage, puis en déplaçant plusieurs fois ce composant perpendiculairement à l'axe optique, et perpendiculairement aux traits du réseau, pour différentes position du réseau. Plus précisément, l'invention propose de déplacer le composant optique de révolution d'abord suivant l'axe y lorsque les traits du réseau sont parallèles à la direction z, et ensuite suivant l'axe z après avoir disposé les traits du réseau parallèlement à l'axe y.

Pour chaque déplacement, on calcule les variations de l'aberration transverse dans le plan du réseau 14, à l'aide d'une mesure de phase réduite, en levant l'incertitude sur les phases en comptant le nombre de franges qui défilent lors du déplacement; pour chaque déplacement, on mesure en outre les variations de l'aberration transverse dans le plan de la caméra de mesure de l'aberration 27. On déduit de ces mesures la relation recherchée.

On note (l, m) un repère de coordonnées en pixels sur l'image de la caméra de mesure de l'aberration 27. Les axes de ce repère sont les axes de la matrice CCD de la caméra 27, et ce repère n'est pas nécessairement isotrope, compte tenu de la caméra 27. On note (p, q) un repère orthonormé de coordonnées en millimètres sur le réseau 14, un des axes de ce repère étant parallèle aux lignes du réseau.

Les origines (0, 0) de ces deux repères correspondent aux positions respectives sur la caméra 27 et sur le réseau 14 du rayon de référence émis par le laser de mesure de l'aberration 25, en l'absence de composant sur le porte pièce.

L'invention propose, dans un mode de réalisation d'établir la relation, pour un rayon, entre l'aberration transverse (l, m) sur la caméra de mesure de l'aberration 27 et l'aberration transverse (p, q) sur le réseau 14, sous la forme d'une relation matricielle:

$$(p, q) = A.^t(l, m)$$

où A est une matrice carrée 2x2 avec quatre coefficients a, b, c, d, ce qui donne en forme développée:

$$p = a.l + b.m$$

$$q = c.l + d.m$$

Cette matrice n'est pas simplement identitaire, dans la mesure où la caméra 27 peut être déplacée le long de l'axe optique, où les axes de la caméra ne sont pas nécessairement isotropes, et où les axes (p, q) et (l, m) ne sont pas nécessairement alignés exactement. D'autres choix de relation, de repères ou d'origines sont possibles, comme expliqué plus bas.

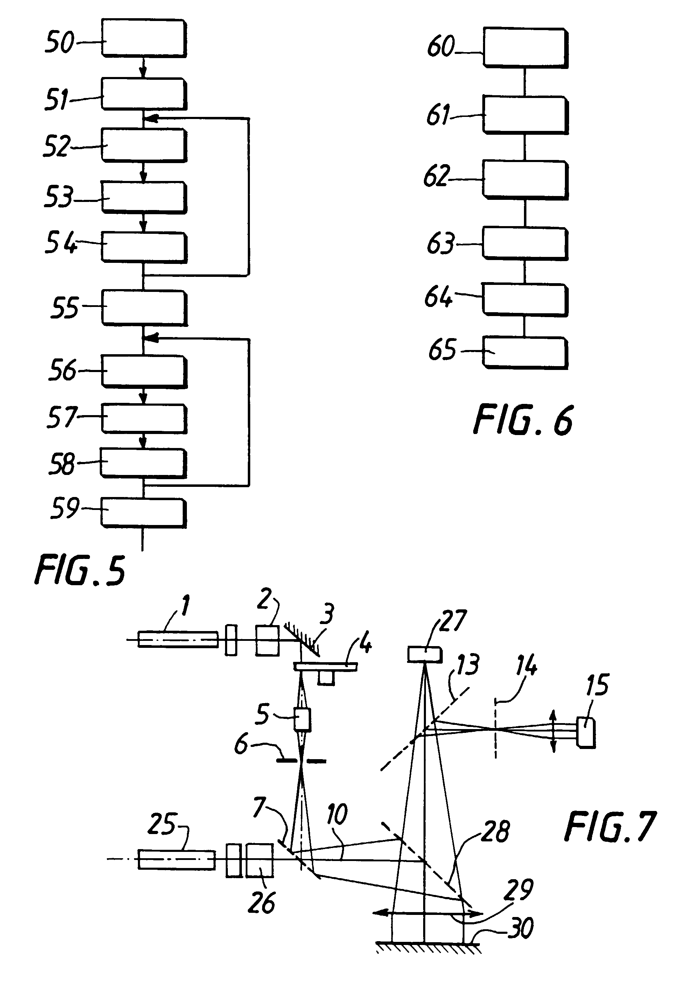

La figure 5 montre un ordinogramme d'un étalonnage de l'appareil selon l'invention. On étalonne le montage en déterminant les coefficients de la matrice A à l'aide d'un composant optique de révolution.

A l'étape 50, on fixe les origines dans les repères (p, q) et (l, m). Pour cela, on enlève tout composant du porte pièce 11, on ferme l'obturateur 2 et on ouvre l'obturateur 26. Le réseau 14 est positionné de sorte que le rayon de référence ne tombe pas sur une ligne du réseau: on visualise sur la caméra 15 une image blanche, avec un spot correspondant au faisceau du laser 25. On acquiert manuellement ou automatiquement sur les caméras 27 et 15 les positions du spot, en pixels, qui sont ensuite matérialisées par une croix ou tout autre moyen approprié. On ferme ensuite l'obturateur 26 et on ouvre l'obturateur 2. On mesure à l'aide du dispositif de mesure de phase la phase réduite dans les directions p et q au point origine dans le repère (p, q), qui correspond au point matérialisé par une croix sur la matrice CCD de la caméra 15. On calibre le dispositif de mesure de phase en déplaçant le réseau pour avoir une phase réduite nulle au niveau du point d'impact du rayon de référence.

A l'étape 51, on place sur le porte pièce 11 un composant optique ou jauge, de révolution.

A l'étape 52, on ferme l'obturateur 2 et on ouvre l'obturateur 26. Le faisceau du laser 25 forme sur la caméra 27 un spot qui peut être décalé par rapport au point origine déterminé à l'étape 50: on déplace le porte pièce 11 en translation suivant les axes y et z de sorte à ramener le spot sur la croix matérialisant l'origine du repère (l, m). De la sorte, on place le centre optique de la jauge optique sur le rayon de référence, qui dans le cas du montage de la figure 4 est confondu avec l'axe optique 10. Aux imprécisions de réglage près, le rayon de référence passe par le centre optique de la jauge et arrive alors au point origine du repère (p, q) sur le réseau 14.

A l'étape 53, on ferme l'obturateur 26 et on ouvre l'obturateur 2. Apparaît sur la caméra 15 un réseau de franges. On déplace le porte pièce 11 en translation suivant l'axe y de sorte à faire défiler sur la croix matérialisant sur la matrice de la caméra 15 l'origine du repère (p, q) un nombre entier n de franges, et on stocke ce nombre. Il s'agit d'un nombre entier relatif, dont on détermine le signe en repérant le sens de déplacement du spot sur la caméra 27. Dans la mesure où les axes (p, q) et (l, m) sont sensiblement alignés, le défilement des franges ne se fait normalement que dans une direction lorsque l'on déplace le composant de révolution.

On mesure ensuite les phases réduites $\varphi_p$ et $\varphi_q$ dans les directions p et q au point origine dans le repère (p, q), qui correspond au point marqué d'une croix sur la matrice de la caméra 15.

La phase absolue est nulle au point du repère (p, q) où arrive le rayon passant par le centre optique de la jauge optique de révolution. De la sorte, connaissant le nombre de franges du réseau ayant défilé lors de l'étape 53, on peut déterminer les phases absolues $\Phi_p$ et $\Phi_q$ dans les directions p et q au point origine dans le repère (p, q), après l'étape 53, à l'aide des formules suivantes:

$$\Phi_p = \varphi_p + 2\pi.n$$

$$\Phi_q = \varphi_q$$

Compte tenu des propriétés de la méthode de Ronchi, on peut alors déterminer en millimètres dans le plan du réseau les coordonnées P et Q suivant les axes p et q du point où arrive le rayon de référence, à l'aide des formules suivantes:

$$P = \Phi_p.R/2\pi$$

$$Q = \Phi_q.R/2\pi$$

où R est le pas du réseau en millimètres.

On a ainsi déterminé les variations en millimètres dans le plan du réseau de la position du rayon de référence, après le déplacement de l'étape 53.

A l'étape 54, on ferme l'obturateur 2 et on ouvre l'obturateur 26. Le faisceau du laser 25 forme sur la caméra 27 un spot qui est décalé par rapport au point origine: on mesure les coordonnées (L, M) en pixels du spot. De la sorte, on obtient les variations en pixels dans le plan de la caméra 27 de la position du rayon de référence, après le déplacement de l'étape 53.

Après l'étape 54, on connaît donc, pour le déplacement effectué à l'étape 53 dans la direction de l'axe y, les variations de la position (L, M) du point d'arrivée du rayon de référence dans le repère (l, m), et les variations correspondantes (P, Q) du point d'arrivée du rayon de référence dans le repère (p, q). On a bien sûr la relation:

$$(P, Q) = A.^t(L, M)$$

qui fournit deux équations à quatre inconnues a, b, c et d.

On stocke les valeurs P, Q, L et M obtenues

A l'étape 55, on fait tourner le réseau 14 de 90°.

Les étapes 56 à 58 correspondent aux étapes 52 à 54; toutefois, on échange les axes de coordonnées pour tenir compte de la rotation du réseau, en d'autres termes dans les relations détaillées en référence aux étapes 52 à 54, on échange P et Q d'une part, et L et M d'autre part.

On peut répéter i fois les étapes 52 à 54 ou j fois les étapes 56 à 58, en stockant les valeurs $P_i$, $Q_i$, $L_i$ et $M_i$ ou $P_j$, $Q_j$, $L_j$ et $M_j$ obtenues à chaque fois.

A l'étape 59, on dispose de 2.(i+j) équations à 4 inconnues a, b, c et d. On résout ces équations, par exemple par une méthode classique de moindre carrés, ou encore par une simple inversion de matrice si i=j=1.

On peut aussi vérifier la validité de la résolution dans le cas des moindres carrés, par une méthode d'évaluation connue.

On connaît alors les valeurs des coefficients a, b, c, d de la matrice A.

On peut vérifier la validité des coefficients obtenus, en calculant la valeur de a.b+c.d, de $\sqrt{[(a^2+c^2)/(b^2+d^2)]}$ et de arctg(c/a). a.b+c.d devrait avoir une valeur nulle compte tenu de la symétrie du montage en rotation autour de l'axe optique; $\sqrt{[(a^2+c^2)/(b^2+d^2)]}$ correspond au rapport du grandissement selon les axes de la caméra 27; arctg(c/a) correspond à l'angle d'inclinaison des axes de la matrice CCD de la caméra 27 par rapport aux traits du réseau.

A l'issue de l'étalonnage, on dispose donc d'une méthode permettant de calculer, pour une aberration transverse donnée mesurée sur la caméra de mesure de l'aberration, l'aberration transverse en millimètres dans le plan du réseau. Comme cela apparaît clairement à l'homme du métier, ces différentes étapes peuvent être plus ou moins automatisées, en fonction des nécessités.

Ceci permet, selon l'invention, de lever l'incertitude de phase en déterminant une phase absolue en un point du réseau, comme on va maintenant l'expliquer.

La figure 6 montre un ordinogramme d'un procédé de mesure selon l'invention.

Pour lever l'incertitude sur les phases inhérente à toute méthode de déflectométrie à franges, l'invention propose de déterminer la phase absolue en un point du réseau. On choisit pour cela de mesurer la phase réduite à l'origine du repère (p, q) dans le réseau 14.

On détermine ensuite à l'aide des informations d'étalonnage les coordonnées du point d'impact du rayon de référence sur le réseau. Connaissant le pas du réseau, on peut déterminer le nombre de traits du réseau entre l'origine du repère (p, q) et le point d'impact du rayon de référence. Ceci permet de calculer la phase absolue à l'origine du repère (p, q).

Selon l'invention, il n'est pas nécessaire d'étalonner le montage avec une grande précision: la position du point d'impact du rayon de référence sert uniquement à lever l'incertitude sur la phase absolue, mais la précision de la mesure est liée à la mesure de la phase réduite à l'origine du repère (p, q). Autrement dit, une précision d'étalonnage d'un demi pas de réseau suffit, ce qui explique qu'il suffise de repérer la position du rayon de référence sur la caméra 27 avec une précision d'un pixel.

On donne en référence à la figure 6 les diverses étapes d'une mesure selon l'invention.

A l'étape 60, on dispose le composant à mesurer dans le porte pièce.

A l'étape 61, on ferme l'obturateur 2 et on ouvre l'obturateur 26. Le faisceau du laser 25 forme sur la caméra 27 un spot qui est décalé par rapport au point origine, dans la mesure où le composant présente un prisme: on mesure les coordonnées $(L_o, M_o)$ en pixels du spot. De la sorte, on obtient en pixels dans le plan de la caméra 27 la position du rayon de référence.

A l'étape 62, on calcule, à partir de la matrice A établie lors de l'étalonnage du montage, la position $(P_o, Q_o)$ du point d'impact du rayon de référence sur le réseau 14, dans le repère (p, q), à l'aide de la formule:

$$(P_o, Q_o) = A.^t(L_o, M_o)$$

En divisant $P_o$ et $Q_o$ par $R/2\pi$ - le pas du réseau sur $2\pi$ -, on calcule de façon approximative la phase absolue à l'origine du repère (p, q), dans les directions p et q: $P_o.2\pi/R$ et $Q_o.2\pi/R$.

A l'étape 63, on ferme l'obturateur 26 et on ouvre l'obturateur 2. On mesure les phases réduites $\varphi_p$ et $\varphi_q$ à l'origine du repère (p, q), dans les directions p et q, à l'aide du dispositif de mesure de phase.

A l'étape 64, on calcule les valeurs $N_p$ et $N_q$ qui minimisent les quantités:

$$\varphi_p + 2.\pi.N_p - P_o.2\pi/R$$

$$\varphi_q + 2.\pi.N_q - Q_o.2\pi/R$$

La détermination de $N_p$ et $N_q$ permet de calculer les phases absolues à l'origine du repère (p, q), dans les directions p et q, qui valent

$$\Phi_p = \varphi_p + 2.\pi.N_p$$

$$\Phi_q = \varphi_q + 2.\pi.N_q$$

Comme expliqué plus haut, et comme le montrent ces formules, la précision sur la phase absolue est donnée par la précision sur la mesure de la phase relative, et non par la précision obtenue sur $P_o$ et $Q_o$. Il suffit de déterminer les entiers $N_p$ et $N_q$ à 0,5 près.

A l'étape 65, on peut à l'aide d'une méthode de Ronchi classique, déterminer la carte des pentes du front d'onde; comme on connaît la phase absolue à l'origine du repère (p, q), obtenue selon l'invention, on peut intégrer les cartes de pente pour déterminer la structure géométrique ou optique du composant à mesurer. On peut donc calculer le prisme du composant optique, ou l'inclinaison de la surface d'onde réfléchie ou transmise par le composant à mesurer.

Avantageusement, on procède pour cela comme indiqué dans les documents précités de la demanderesse, qui sont incorporés par référence. On obtient de la sorte les informations recherchées sur la structure du composant mesuré: gradient d'indice dans une lame à faces parallèles, surface inconnue d'un dioptre, etc.

La figure 7 montre un schéma analogue à celui de la figure 4, mais pour la mise en oeuvre d'une déflectométrie en réflexion. On reconnaît sur la figure 7 des éléments 1, 2, 3, 4, 5, 6, 7, 10, 13, 14, 15, 25, 26, 27 analogues à ceux de la figure 4, qui portent les mêmes références.

Les différences entre les montages des figures 4 et 7 sont les suivantes: le rayonnement provenant de la lame 7 arrive sur une lame semi réfléchissante 28, qui est inclinée de 45° par rapport à l'axe 10. La lame 28 renvoie le rayonnement vers une lentille (ou un objectif) 29; le rayonnement issu de la lentille 29 est réfléchi sur le composant à mesurer 30. Le rayonnement réfléchi traverse de nouveau la lentille 29, puis la lame 28, et arrive sur une lame semi-réfléchissante 13.

Le montage de la figure 7 permet d'utiliser l'invention pour une déflectométrie en réflexion, ce qui permet d'éviter l'étape d'autocollimation indispensable dans l'art antérieur. On peut aussi utiliser un montage commun, permettant à la fois des mesures en transmission et en réflexion, avec des parties communes et des parties escamotables.

Bien entendu, l'invention n'est pas limitée aux modes de réalisation préférés décrits en référence aux figures.

On peut utiliser comme moyens de génération d'une source monochromatique de haute qualité d'autres composants qu'un laser, un dépoli et un objectif de microscope. Les moyens d'éclairage du composant par un rayonnement de front d'onde connu peuvent être constitués autrement que par une source monochromatique et un objectif.

On peut parfaitement éclairer le composant optique à analyser par un rayonnement de front d'onde connu, qui présente un front d'onde autre que plan; on peut utiliser des moyens de déflectométrie autres qu'un réseau de Ronchi, par exemple si l'on emploie une méthode de moiré, ou une autre méthode de déflectométrie à franges: il reste nécessaire dans de tels cas, de déterminer la phase absolue au moins en un point du réseau.

On peut aussi choisir de matérialiser un rayon de référence autre que le rayon paraxial, comme c'est le cas dans le montage de la figure 4; ceci ne constitue qu'une modification de la référence de phase dans le plan des moyens de déflectométrie. Pour matérialiser un autre rayon, il suffit par exemple de disposer un laser au voisinage du trou source 6, ou d'utiliser un simple trou, comme décrit plus haut.

Les moyens de mesure décrits - caméra CCD - présentent un avantage de simplicité tout en assurant une précision suffisante: on pourrait aussi choisir d'autres moyens: la caméra de mesure de l'aberration pourrait être remplacée par un simple détecteur de position.

La caméra CCD de mesure de l'aberration n'est pas nécessairement dans le plan conjugué du réseau. Afin de changer la dynamique du système selon les composants à mesurer, on peut la déplacer selon l'axe optique, ce qui ne fait que changer les paramètres de la fonction d'étalonnage.

Pour mesurer l'aberration transverse du rayon de référence, on peut utiliser d'autre moyens que ceux décrits. Dans les dispositifs des figures 4 et 7, on utilise la lame semi réfléchissante 13 pour générer la voie de référence et la voie de déflectométrie. On peut remplacer cette lame par tout dispositif permettant d'orienter le rayonnement réfléchi ou transmis d'une voie sur l'autre. Dans un autre mode de réalisation, on pourrait même utiliser pour la mesure de l'aberration transverse la caméra 15 de la figure, ce qui éviterait de disposer de deux voies après réflexion ou transmission sur le composant. Il suffirait par exemple de pouvoir basculer le réseau 14 hors du rayonnement, lorsque l'on désire mesurer l'aberration. Il faudrait alors déplacer la caméra CCD pour observer le rayon dévié, dans la mesure où le plan du CCD est conjugué optiquement de la face de sortie du composant à mesurer

Le procédé décrit et revendiqué peut avantageusement être mis en oeuvre à l'aide de moyens de commande pilotés par un programme informatique, de sorte à assurer une automatisation plus ou moins complète de l'étalonnage et/ou de la mesure. De nouveau, les choix dépendent des contraintes rencontrées.

On peut choisir d'écrire la relation entre l'aberration transverse fournie par les moyens de mesure de l'aberration et la pente de rayon ou l'aberration transverse dans le plan desdits moyens de déflectométrie, sous une forme autre qu'un produit de matrice, ou avec des repères et des coefficients différents: on peut par exemple utiliser des repères en $(r, \theta)$, ou une matrice constituée à partir de coefficients $(u, v, \vartheta)$ correspondant respectivement pour des repères orthogonaux au grandissement suivant un axe et l'autre et au décalage angulaire entre les repères. Ces variations ne font que modifier les formules de calcul à utiliser, sans que l'on ne s'éloigne de l'enseignement de l'invention. On peut choisir une relation qui n'est pas linéaire, et par exemple modélisée par une fonction polynomiale, de degré quelconque. Ceci ne fait que modifier le nombre de mesures nécessaires lors de l'étalonnage, et le calcul nécessaire sur la base de ces mesures pour déterminer la relation.

La position de référence pour le déplacement du composant de révolution lors de l'étalonnage peut être une position différente de l'alignement sur l'axe optique: de nouveau, ceci n'introduit qu'une variation de la référence de phase.

On pourrait utiliser pour l'étalonnage un composant optique quelconque, ou des étalons de prisme. Si le composant comporte un tore, il suffit alors d'aligner les axes du tore avec les axes du réseau de Ronchi.

Enfin, au lieu d'utiliser pour l'étalonnage un rayon de référence et plusieurs déplacements ou étalons de prisme, on pourrait utiliser plusieurs rayons et un seul déplacement ou étalon de prisme.

Le point de mesure de la phase réduite est avantageusement fixe dans le plan des moyens de déflectométrie, et il correspond dans les modes de réalisation décrit à l'intersection avec l'axe optique du montage, puisque le rayon de référence matérialise le rayon paraxial. D'autres points ou méthodes de mesure peuvent être choisis.

Toutes ces variantes peuvent être combinées ou non, selon les contraintes que posent les objets à analyser par déflectométrie à franges.

## LEGENDE DES FIGURES

Figure 5:

| | |
|---|---|
| Etape 50: | calibrer les origines, sans composant optique; |
| Etape 51: | installer un composant de révolution; |
| Etape 52: | aligner le centre optique du composant sur le rayon de référence; |
| Etape 53: | déplacer le composant, et compter les franges; mesurer les phases relatives calculer l'aberration transverse du rayon de référence dans le plan du réseau 14; |
| Etape 54: | mesurer l'aberration transverse du rayon de référence dans le plan de la caméra 27; |
| Etape 55: | faire tourner le réseau de 90°; |
| Etape 56: | comme l'étape 52; |
| Etape 57: | comme l'étape 53; |
| Etape 58: | comme l'étape 54; |
| Etape 59: | calculer la matrice de passage de l'aberration transverse du rayon de référence dans le plan de la caméra 27 à l'aberration transverse dans le plan du réseau 14. |

Figure 6

| | |
|---|---|
| Etape 60: | installer un composant à mesurer; |
| Etape 61: | mesurer l'aberration transverse du rayon de référence dans le plan de la caméra 27; |
| Etape 62: | calculer l'aberration transverse du rayon de référence dans le plan du réseau 14; |
| Etape 63: | mesurer les phases réduites sur l'axe optique dans le plan du réseau 14; |
| Etape 64: | calculer la phase absolue sur l'axe optique dans le plan du réseau 14; |
| Etape 65: | déterminer et intégrer les cartes de pente. |

## Revendications

1.  Appareil de déflectométrie à franges, comprenant

    des moyens d'éclairage (1, 2, 3, 4, 5, 6, 7, 8) d'un composant optique à mesurer par un rayonnement de front d'onde connu; des moyens (14) de déflectométrie dudit rayonnement après sa réflexion ou sa transmission par ledit composant optique à mesurer; et des moyens (25, 26) pour matérialiser un rayon de référence,

    caractérisé en ce qu'il comprend en outre des moyens (27) de mesure de l'aberration transverse du rayon de référence après sa réflexion ou sa transmission par ledit composant optique à mesurer.

2.  Appareil de déflectométrie à franges selon la revendication 1, caractérisé en ce que les moyens (27) de mesure de l'aberration transverse du rayon de référence sont dans une voie distincte des moyens (14) de déflectométrie.

3.  Appareil de déflectométrie à franges selon la revendication 1 ou 2, caractérisé en ce qu'il comprend une lame semi-réfléchissante (13) renvoyant le rayonnement réfléchi ou transmis par ledit composant optique à mesurer d'une part vers lesdits moyens (14) de déflectométrie et d'autres part vers lesdits moyens (27) de mesure de l'aberration transverse.

4.  Appareil de déflectométrie à franges selon l'une des revendications 1 à 3, caractérisé en ce que lesdits moyens (27) de mesure de l'aberration transverse sont dans un plan optiquement conjugué du plan desdits moyens (14) de déflectométrie.

5.  Appareil de déflectométrie à franges selon l'une des revendications 1 à 4, caractérisé en ce que lesdits moyens de mesure de l'aberration transverse comprennent une caméra CCD, et des moyens d'acquisition de la position d'un spot sur l'image de ladite caméra.

6.  Appareil de déflectométrie à franges selon l'une des revendications 1 à 5, caractérisé en ce que lesdits moyens de déflectométrie comprennent un réseau de Ronchi (14), et des moyens d'analyse des franges générées par le réseau.

7.  Appareil de déflectométrie à franges selon l'une des revendications 1 à 6, caractérisé en ce que lesdits moyens pour matérialiser un rayon de référence comprennent un laser (25) symétrique desdits moyens d'éclairage par rapport à une lame semi-réfléchissante (7).

**8.** Appareil de déflectométrie à franges selon l'une des revendications 1 à 7, caractérisé en ce que les moyens (25, 26) pour matérialiser un rayon de référence matérialisent un rayon paraxial.

**9.** Procédé de déflectométrie à franges, comprenant les étapes consistant à éclairer un composant optique à mesurer par un rayonnement de front d'onde connu, et à analyser les franges générées dans des moyens de déflectométrie par le rayonnement réfléchi ou transmis par le composant, caractérisé en ce qu'il comprend en outre les étapes consistant à

- mesurer pour un rayon réfléchi ou transmis par le composant la phase réduite sur les moyens de déflectométrie;
- mesurer l'aberration transverse dudit rayon;
- calculer la phase absolue du rayon sur les moyens de déflectométrie à partir de la mesure de ladite phase réduite, en levant l'indétermination grâce à la mesure de ladite aberration transverse.

**10.** Procédé de déflectométrie à franges selon la revendication 9, caractérisé en ce que l'on mesure l'aberration transverse dudit rayon dans une voie de référence différente de la voie des moyens de déflectométrie.

**11.** Procédé de déflectométrie à franges selon la revendication 9 ou 10, caractérisé en ce qu'il comprend une étape d'étalonnage consistant à déterminer une relation entre l'aberration transverse d'un rayon réfléchi ou transmis par le composant et la pente dudit rayon dans les moyens de déflectométrie.

**12.** Procédé de déflectométrie à franges selon la revendication 11, caractérisé en ce que l'étape d'étalonnage comprend les étapes consistant à:

- éclairer un composant optique de prisme variable;
- déplacer au moins deux fois ledit composant optique;
- mesurer pour chaque déplacement du composant optique, et pour un rayon l'aberration transverse, et la phase réduite sur les moyens de déflectométrie;
- compter pour chaque déplacement du composant optique le nombre de franges qui défilent sur lesdits moyens de déflectométrie au cours du déplacement;
- calculer pour chaque déplacement du composant optique la pente dudit rayon dans les moyens de déflectométrie à partir des valeurs mesurées et comptée;

- déterminer ladite relation à partir des valeurs de l'aberration transverse et de la pente obtenues pour chaque déplacement.

**13.** Procédé de déflectométrie à franges selon la revendication 11, caractérisé en ce que l'étape d'étalonnage comprend au moins deux fois les étapes consistant à:

- éclairer un composant optique de prisme connu;
- mesurer pour un rayon l'aberration transverse d'un rayon, et la phase réduite sur les moyens de déflectométrie;
- calculer la pente dudit rayon dans les moyens de déflectométrie à partir des valeurs mesurées et de la valeur du prisme du composant optique;

et en ce que l'on détermine ladite relation à partir de l'ensemble des valeurs de l'aberration transverse et de la pente ainsi obtenues.

**14.** Procédé de déflectométrie à franges selon la revendication 10, caractérisé en ce que ladite méthode de déflectométrie à franges est une méthode de Ronchi, et en ce qu'il comprend une étape d'étalonnage consistant à déterminer une relation entre l'aberration transverse d'un rayon dans la voie de référence et l'aberration transverse dudit rayon dans les moyens de déflectométrie.

**15.** Procédé de déflectométrie à franges selon la revendication 14, caractérisé en ce que l'étape d'étalonnage comprend les étapes consistant à:

- éclairer un composant optique de prisme variable;
- déplacer au moins deux fois ledit composant optique
- mesurer pour chaque déplacement du composant optique, et pour un rayon l'aberration transverse dans la voie de référence, et la phase réduite sur les moyens de déflectométrie;
- compter pour chaque déplacement du composant optique le nombre de franges qui défilent sur lesdits moyens de déflectométrie au cours du déplacement;
- calculer pour chaque déplacement du composant optique l'aberration transverse dudit rayon dans les moyens de déflectométrie à partir des valeurs mesurées et comptée;
- déterminer ladite relation à partir des valeurs de l'aberration transverse dans la voie de référence et de l'aberration transverse dudit rayon dans les moyens de déflectométrie obtenues pour chaque déplacement.

**16.** Procédé de déflectométrie à franges selon la revendication 14, caractérisé en ce que l'étape d'étalonnage comprend au moins deux fois les étapes consistant à:

- éclairer un composant optique de prisme connu;
- mesurer pour un rayon l'aberration transverse dans la voie de référence, et la phase réduite sur les moyens de déflectométrie;
- calculer l'aberration transverse dudit rayon dans les moyens de déflectométrie à partir des valeurs mesurées et de la valeur du prisme;

et en ce que l'on détermine ladite relation à partir de l'ensemble des valeurs de l'aberration transverse dans la voie de référence et de l'aberration transverse dans les moyens de déflectométrie ainsi obtenues.

**17.** Procédé de déflectométrie à franges selon l'une des revendications 11 à 16, caractérisé en ce que ladite relation est une fonction linéaire

**18.** Procédé de déflectométrie à franges selon la revendication 17 et la revendication 12 ou 15, caractérisé en ce que ce que ledit composant optique est déplacé au moins deux fois.

**19.** Application du procédé selon l'une des revendications 9 à 18 à la mesure de lentilles ophtalmiques, de lentilles à gradient d'indice et de moules pour lentilles ophtalmiques.


**Patentansprüche**

**1.** Streifendeflektometer, umfassend eine Beleuchtungseinrichtung (1, 2, 3, 4, 5, 6, 7, 8) eines optischen Bauteiles, welches durch eine Strahlung mit bekannter Wellenfront zu messen ist;

eine Deflektormetereinrichtung (14) für die Strahlung nach Reflexion oder Transmission durch das zu messende optische Bauteil; und eine Einrichtung (25, 26) um einen Referenzstrahl darzustellen oder abzubilden, dadurch gekennzeichnet, daß es ferner eine Einrichtung (27) zur Messung der Quer-Aberration des Referenzstrahls nach Reflexion oder Transmission durch das zu messende optische Bauteil umfaßt.

**2.** Streifendeflektometer nach Anspruch 1, dadurch gekennzeichnet, daß die Einrichtung (27) zum Messen der Quer-Aberration des Referenzstrahls in einem distinkten Pfad der Deflektometrieeinrichtung (14) liegt.

**3.** Streifendeflektometer nach Anspruch 1 oder 2, dadurch gekennzeichnet, daß es ein semi-reflektierendes Blatt (13) umfaßt, welches die durch das zu messende optische Bauteil reflektierte oder transmittierte Strahlung einerseits hin zu der Deflektometrieeinrichtung (14) und andererseits hin zu der Einrichtung (27) zur Messung der Quer-Aberration zurückwirft.

**4.** Streifendeflektometer nach einem der Ansprüche 1 bis 3, dadurch gekennzeichnet, daß die Einrichtung (27) zur Messung der Quer-Aberration in einer optisch konjugierten Ebene zu der Ebene der Deflektometrieeinrichtung (14) liegt.

**5.** Streifendeflektometer nach einem der Ansprüche 1 bis 4, dadurch gekennzeichnet, daß die Einrichtung zur Messung der Quer-Aberration eine CCD Kamera umfaßt, sowie Mittel zur Erfassung der Position eines Punktes an dem Bild der Kamera.

**6.** Streifendeflektometer nach einem der Ansprüche 1 bis 5, dadurch gekennzeichnet, daß die Deflektometrieeinrichtung ein Ronchi-Gitter (14) umfaßt, sowie eine Einrichtung zum Analysieren der durch das Gitter erzeugten Streifen.

**7.** Streifendeflektometer nach einem der Ansprüche 1 bis 6, dadurch gekennzeichnet, daß die Einrichtung zum Darstellen eines Referenzstrahles einen Laser (25) umfaßt, symmetrisch zu der Beleuchtungseinrichtung mit Bezug auf ein semi-reflektierendes Blatt (7).

**8.** Streifendeflektometer nach einem der Ansprüche 1 bis 7, dadurch gekennzeichnet, daß die Einrichtung (25, 26) zum Darstellen eines Referenzstrahles einen paraxialen Strahl darstellt oder abbildet.

**9.** Streifendeflektometrieverfahren, umfassend die Schritte des Beleuchtens eines zu messenden optischen Bauteils durch eine Strahlung von bekannter Wellenfront, und des Analysierens der in einer Deflektometrieeinrichtung mittels durch das Bauteil reflektierter oder transmittierter Strahlung erzeugten Streifen, dadurch gekennzeichnet, daß es ferner die Schritte umfaßt, des

- Messens der an der Deflektometrieeinrichtung reduzierten Phase für einen durch das Bauteil reflektierten oder transmittierten Strahl;
- Messens der Quer-Aberration des Strahles;
- Berechnens der absoluten Phase des Strahles an der Deflektometrieeinrichtung ausgehend von der Messung der reduzierten Phase, wobei man die Unschärfe bzw. Unbestimmtheit mittels der Messung der Quer-Aberration aufhebt.

**10.** Streifendeflektometrieverfahren nach Anspruch 9, dadurch gekennzeichnet, daß man die Quer-Aberration des Strahles in einem Referenzpfad mißt, der sich von dem Pfad der Deflektometrieeinrichtung unterscheidet.

**11.** Streifendeflektometrieverfahren nach Anspruch 9 oder 10, dadurch gekennzeichnet, daß es einen Normierschritt umfaßt, bei welchem man eine Beziehung zwischen der Quer-Aberration eines durch das Bauteil reflektierten oder transmittierten Strahles und der Neigung des Strahles in der Deflektometrieeinrichtung bestimmt.

**12.** Streifendeflektometrieverfahren nach Anspruch 11, dadurch gekennzeichnet, daß der Normierschritt die Schritte umfaßt:

- Beleuchten eines optischen Bauteiles mit variablem Prisma;
- zumindest zweifaches Versetzen des optischen Bauteils;
- Messen der Quer-Aberration und der reduzierten Phase an der Deflektometrieeinrichtung bzw. der an der Deflektometrieeinrichtung reduzierten Phase für jede Versetzung oder Bewegung des optischen Bauteiles und für einen Strahl;
- Zählen der Anzahl der Streifen, die an der Deflektometrieeinrichtung während der Bewegung vorbeilaufen, und zwar für jede Bewegung des optischen Bauteiles;
- Berechnen für jede Bewegung des optischen Bauteiles der Neigung des Strahles in der Deflektometrieeinrichtung ausgehend von gemessenen und gezählten Werten;
- Bestimmen der Beziehung ausgehend von Werten der Quer-Aberration und der Neigung, erhalten für jede Bewegung.

**13.** Streifendeflektometrieverfahren nach Anspruch 11, dadurch gekennzeichnet, daß der Normierschritt zumindest zweifach die folgenden Schritte umfaßt:

- Beleuchten eines optischen Bauteils mit bekanntem Prisma;
- Messen der Quer-Aberration eines Strahles und der reduzierten Phase an der Deflektometriecinrichtung bzw. der an der Deflektometrieeinrichtung reduzierten Phase für einen Strahl;
- Berechnen der Neigung des Strahles in der Deflektometrieeinrichtung ausgehend von den gemessenen Werten und dem Prismenwert bzw. dem Wert des Prisma des optischen Bauteiles;

und daß man die Beziehung ausgehend von der Gesamtheit der Werte der Quer-Aberration und der somit erhaltenen Neigung bestimmt.

**14.** Streifendeflektometrieverfahren nach Anspruch 10, dadurch gekennzeichnet, daß das Streifendeflektometrieprinzip ein Ronchi-Prinzip ist, und daß es einen Normierschritt umfaßt, bei welchem man eine Beziehung zwischen der Quer-Aberration eines Strahles in einer Referenzspur bzw. einem Referenzpfad und einer Quer-Aberration des Strahles in der Deflektometrieeinrichtung bestimmt.

**15.** Streifendeilektometrieverfahren nach Anspruch 14, dadurch gekennzeichnet, daß der Normierschritt die Schritte umfaßt:

- Beleuchtens eines optischen Bauteiles mit variablem Prisma;
- zumindest zweifaches Versetzen oder Bewegen des optischen Bauteiles;
- Messen der Quer-Aberration in dem Referenzpfad und der reduzierten Phase an der Deflektometrieeinrichtung für jede Bewegung des optischen Bauteiles und für einen Strahl;
- Zählen der Anzahl an Streifen, die an der Deflektometrieeinrichtung während der Bewegung vorbeilaufen, und zwar für jede Bewegung des optischen Bauteiles;
- Berechnen der Quer-Aberration des Strahles in der Deflektometrieeinrichtung für jede Bewegung des optischen Bauteiles, ausgehend von gemessenen und gezählten Werten;
- Bestimmen der Beziehung ausgehend von den Werten der Quer-Aberration in der Referenzspur und der Quer-Aberration des Strahles in der Deflektometrieeinrichtung, und zwar erhalten für jede Versetzung.

**16.** Streifendeflektometrieverfahren nach Anspruch 14, dadurch gekennzeichnet, daß der Normierschritt zumindest zweifach die folgenden Schritte umfaßt:

- Beleuchten eines optischen Bauteiles mit bekanntem Prisma;
- Messen der Quer-Aberration eines Strahles in der Referenzspur bzw. dem Referenzpfad und der reduzierten Phase an der Deflektometrieeinrichtung;
- Berechnen der Quer-Aberration des Strahles in der Deflektometrieeinrichtung ausgehend von gemessenen Werten und dem Wert des Prisma bzw. dem Prismenwert;

und daß man die Beziehung bestimmt ausgehend von der Gesamtheit der somit erhaltenen Werte der Quer-Aberration in der Referenzspur und der Quer-Aberration in der Deflektometrieeinrichtung.

**17.** Streifendeflektomtrieverfahren nach einem der Ansprüche 11 bis 16, dadurch gekennzeichnet, daß die Beziehung eine lineare Funktion ist.

**18.** Streifendeflektometrieverfahen nach Anspruch 17 und dem Anspruch 12 oder 15, dadurch gekennzeichnet, daß das optische Bauteil zumindest zweimal bewegt bzw. versetzt wird.

**19.** Anwendung des Verfahrens nach einem der Ansprüche 9 bis 18 auf die Messung von ophthalmischen Linsen, Linsen mit Indexgradienten und von Formen für ophthalmische Linsen.

**Claims**

**1.** Fringe deflectometry apparatus comprising:

means (1, 2, 3, 4, 5, 6, 7, 8) for illuminating an optical component to be measured using radiation with a known wavefront; deflectometry means (14) for said radiation after reflection or transmission thereof by said optical component to be measured; and means (25, 26) for materializing a reference ray, characterized in that it further comprises means (27) for measuring transverse aberration of said reference ray after reflection or transmission thereof by said optical component to be measured.

**2.** The fringe deflectometry apparatus according to claim 1, characterized in that the means (27) for measurement of transverse aberration of said reference ray are in a channel that is separate from said deflectometry means (14).

**3.** The fringe deflectometry apparatus according to claim 1 or 2, characterized in that it comprises a semi-reflecting plate (13) for directing radiation reflected or transmitted by said optical component to be measured firstly to said deflectometry means (14) and, secondly, to said transverse aberration measurement means (27).

**4.** The fringe deflectometry apparatus according to one of claims 1 to 3, characterized in that said transverse aberration measurement means (27) are in a conjugate optical plane with the plane of said deflectometry means (14).

**5.** The fringe deflectometry apparatus according to one of claims 1 to 4, characterized in that said transverse aberration measurement means comprise a CCD camera and means for acquisition of the position of a spot on an image of said camera.

**6.** The fringe deflectometry apparatus according to one of claims 1 to 5, characterized in that said deflectometry means comprise a Ronchi grating (14) and means for analyzing fringes generated by said grating.

**7.** The fringe deflectometry apparatus according to one of claims 1 to 6, characterized in that said means for materializing a reference ray comprise a laser (25) symmetrical with said illumination means with respect to a semi-reflecting plate (7).

**8.** The fringe deflectometry apparatus according to one of claims 1 to 7, characterized in that said means (25, 26) for materializing a reference ray materialize a para-axial ray.

**9.** A fringe deflectometry method comprising the steps of illuminating an optical component to be measured with radiation of known wavefront, and analyzing, in deflectometry means, the fringes generated by the radiation reflected or transmitted by said component, characterized in that it further comprises the steps of:

- measuring, for a ray reflected or transmitted by said component, a reduced phase on said deflectometry means;
- measuring transverse aberration of said ray;
- calculating absolute phase of said ray by deflectometry means from measurement of said reduced phase, thereby removing uncertainty through measurement of said transverse aberration.

**10.** The fringe deflectometry method according to claim 9, characterized in that transverse aberration of said ray is measured in a reference channel which is different from the channel of said deflectometry means.

**11.** The fringe deflectometry method according to claim 9 or claim 10, characterized in that it comprises a calibration step consisting in determining a relation between transverse aberration of a ray reflected or transmitted by said component and the slope of said ray in said deflectometry means.

**12.** The fringe deflectometry method according to claim 11, characterized in that said calibration comprises the steps of:

- illuminating an optical component of variable prism;
- moving said component at least twice;
- measuring, for each movement of said optical component, and for one ray, transverse aberration and reduced phase on said deflectometry means;
- counting, for each displacement of said optical component the number of fringes that pass on said deflectometry means during said movement;
- calculating, from said measured and counted values and for each movement of said optical component, a slope of said ray in said deflectometry means;
- determining said relation from values of transverse aberration and slope, obtained for each movement.

13. The fringe deflectometry method according to claim 11, characterized in that said calibration step comprises carrying out at least twice, the steps consisting of:

- illuminating an optical component of known prism;
- measuring, for a ray, transverse aberration of a ray, and reduced phase on said deflectometry means;
- calculating a slope of said ray in said deflectometry means from values measured and from a value of prism of said optical component;
- and in that said relation is determined from the set of values for transverse aberration and slope thus obtained.

14. The fringe deflectometry method according to claim 10, characterized in that said fringe deflectometry method is a Ronchi method and in that is comprises a calibration stage consisting in determining a relation between transverse aberration of a ray in a reference channel and transverse aberration of said ray in said deflectometry means.

15. The fringe deflectometry method according to claim 14, characterized in that said calibration step comprises the steps of:

- illuminating an optical component of variable prism;
- moving said component at least twice;
- measuring, for each movement of said optical component, and for a ray, transverse aberration in said reference channel and reduced phase on said deflectometry means;
- counting, for each displacement of said optical component the number of fringes that pass on said deflectometry means during said movement;
- calculating from said measured and counted values and for each movement of said optical component, a transverse aberration of said ray in said deflectometry means;
- determining said relation from values for transverse aberration in said reference channel and for transverse aberration of said ray in said deflectometry means, obtained for each movement.

16. The fringe deflectometry method according to claim 14, characterized in that said calibration step comprises carrying out at least twice, the steps consisting of:

- illuminating an optical component of known prism;
- measuring, for a ray, transverse aberration of a ray, and reduced phase on said deflectometry means;
- calculating a transverse aberration of said ray in said deflectometry means from values measured and a value of prism of said optical component;
- and in that said relation is determined from the set of values thus obtained for transverse aberration in said reference channel and transverse aberration in said deflectometry means.

17. The fringe deflectometry method according to one of claims 11 to 16, characterized in that said relation is a linear function.

18. The fringe deflectometry according to claim 17 and claim 12 or 15, characterized in that said optical component is moved at least twice.

19. Application of the method according to one of claims 9 to 18 to measurement of ophthalmic lenses, refractive index gradient lenses and molds for ophthalmic lenses.

FIG.1

FIG.2

16

FIG.3

FIG.4

FIG.5

FIG. 6

FIG.7